# EUROPEAN PATENT SPECIFICATION

(11) **EP 3 059 907 B1**
(45) Date of publication and mention of the grant of the patent: **16.01.2019**
(21) Application number: 14854286.3
(22) Date of filing: 25.06.2014
(51) Int. Cl.: H04L 12/70, H04L 12/24, H04L 29/12, H04L 12/721

(54) **NETWORK PACKET FORWARDING METHOD AND DEVICE**
VERFAHREN UND VORRICHTUNG ZUR NETZWERKPAKETWEITERLEITUNG
PROCEDE ET DISPOSITIF DE TRANSMISSION DE PAQUETS DE RÉSEAU

(30) Priority: 17.10.2013 CN 201310488743
(43) Date of publication of application: 24.08.2016
(73) Proprietor: ZTE Corporation, Shenzhen, Guangdong 518057 (CN)
(72) Inventor: LIN, Ning, Shenzhen Guangdong 518057 (CN)
(74) Representative: Brevalex
(86) International application number: PCT/CN2014/080772
(87) International publication number: WO 2015/055021

(56) References cited:
- EP-A1- 1 901 480
- EP-A1- 1 936 883
- EP-A1- 2 536 248
- CN-A- 101 360 097
- CN-A- 101 436 998
- CN-A- 102 404 192
- CN-A- 102 761 440
- CN-A- 102 868 523

## Description

### TECHNICAL FIELD

The disclosure relates to network device management and, in particular to, a method and device for forwarding a network packet.

### BACKGROUND

Generally, a network management packet consists of packets in an IP format. If it is necessary to send such a packet from a certain network device to a network management device, the layer 3 forwarding of an IP packet is inevitable. During the layer 3 forwarding, a Media Access Control (MAC) address encapsulated in a layer 2 header of the IP packet must be the MAC address linking to a gateway. In a network, it is the MAC address linking to a routing next-hop device.

When network expansion and network deployment are performed, if a new network device comes online, and the new network device needs to send the network management packet to the network management device, it is necessary to configure an IP address of the corresponding network management device on the new network device. Then, the MAC address of an upstream network device is determined through the configured IP address of the network management device and an Address Resolution Protocol (ARP). A communication channel between the new online network device and the upstream network device is realized, and a network management channel between the new online network device and the network management device is established according to a management channel between the upstream network device and the network management device and a communication channel between the upstream network device and the new network device, so that the network management device can manage the new online network device via the established network management channel.

At present, managing and opening the new online network device in a new site is generally performed manually, including the following steps:
1. a connection port with the upstream network device is opened for the new online network device, and the corresponding IP address of the upstream network device is configured for the opened connection port;
2. a connection port with the new online network device is opened for the upstream network device, and the corresponding IP address of the new online network device is configured for the opened connection port;
3. a mutual identification between the new online network device and the upstream network device is implemented according to the configured IP address of the upstream network device and the IP address of the network device newly online, and then a data interaction is implemented; only in the case that the management channel between the upstream network device and the new online network device is acquired according to the configured management channel between the upstream network device and the network management device, the new online network device can send its own information to the network management device, so that the network management device manages the new online network device.

However, in the actual beginning of network engineering, if there is great network deployment, then each of the new online network device in each of the sites can report, through the routing forwarding, its own information (like an identification identifier) to the network management device which performs network management on it only by manually configuring the corresponding IP address in the above way. As such, engineering personnel is required to perform complicated and tedious manual configuration in each of the sites, which is bound to put a great burden on the beginning.

The current mechanism for solving the problem that personnel is required to manually configure the IP address in each of the sites is to directly broadcast in the whole network until the network management device receives information of the new online network device. In this way, it easily results in broadcast storm in the network or occupation of network bandwidth, thereby wasting the network resources and reducing the bandwidth utilization.

EP 1 901 480 A1 discloses a method for implementing initialization configuration for managed devices.

### SUMMARY

In order to solve the existing technical problems, the disclosure mainly provides a method and device for forwarding a network packet.

The embodiments of the disclosure provide a method forwarding a network packet, including that:
a forwarding end establishes a communication connection with a network device to be configured
when a packet forwarding request sent from the network device to be configured is received, the forwarding end analyzes whether there is a prestored forwarding identifier consistent with a forwarding identifier in the packet forwarding request;
when there is the prestored forwarding identifier consistent with the forwarding identifier in the packet forwarding request, the forwarding end determines a forwarding path corresponding to the packet forwarding request according to a predetermined mapping relationship between prestored forwarding identifiers and forwarding paths; and
the forwarding end forwards information of the network device to be configured in the packet forwarding request to a network management device via the determined forwarding path, so that the network management device generates network configuration information of the network device to be configured according to the received information, and delivers the generated network configuration information to the network device to be configured;
wherein the step of determining by the forwarding end, the forwarding path comprises:
   determining, by the forwarding end, a target network device corresponding to the packet forwarding request according to a predetermined mapping relationship between prestored forwarding identifiers and target network devices; and
   according to a predetermined mapping relationship between prestored forwarding paths and network devices, determining the forwarding path corresponding to the packet forwarding request.

The embodiments of the disclosure further provide a device for forwarding a network packet, including:
an analyzing module configured to, when the packet forwarding request sent from the network device to be configured is received, analyze whether there is a prestored forwarding identifier consistent with the forwarding identifier in the packet forwarding request;
a processing module configured to, when there is the prestored forwarding identifier consistent with the forwarding identifier in the packet forwarding request, determine the forwarding path corresponding to the packet forwarding request according to the predetermined mapping relationship between prestored forwarding identifiers and forwarding paths; and
a data transceiving module configured to forward the information of the network device to be configured in the packet forwarding request to the network management device via the determined forwarding path, so that the network management device generates the network configuration information of the network device to be configured according to the received information, and delivers the generated network configuration information to the network device to be configured;
wherein the processing module is further configured to determine a target network device corresponding to the packet forwarding request according to a predetermined mapping relationship between prestored forwarding identifiers and target network devices, and to determine the forwarding path corresponding to the packet forwarding request according to a predetermined mapping relationship between prestored forwarding paths and network devices;
wherein the data transceiving module is further configured to establish a communication connection between the forwarding end and the network device to be configured.

Compared with the conventional technology, according to the embodiments of the disclosure, the network device to be configured initiates automatically the network packet forwarding request including the forwarding identifier. When there is the prestored forwarding identifier consistent with the forwarding identifier in the network packet forwarding request, the forwarding end determines the forwarding path corresponding to the network packet forwarding request, and forwards to the network management device information of the network device to be configured in the network packet forwarding request according to the determined forwarding path, so that the network management device generates the network configuration information of the network device to be configured according to the received information, and delivers the generated network configuration information to the network device to be configured. Thus, the disclosure effectively avoids the technical problems of broadcast storm in the network or occupation of the network bandwidth which are caused by the network device to be configured broadcasting its own information to the network management device, improves the network bandwidth utilization, and introduces the new online network device to the management of the network management device more quickly.

### BRIEF DESCRIPTION OF THE DRAWINGS

Fig. 1 is a flowchart showing a method for forwarding a network packet according to a first embodiment of the disclosure;
Fig. 2 is a flowchart showing a method for forwarding a network packet according to a second embodiment of the disclosure; and
Fig. 3 is a functional module diagram illustrating a device for forwarding a network packet according to a preferred embodiment of the disclosure.

### DETAILED DESCRIPTION

It should be understood that specific embodiments described herein are only used to illustrate the disclosure and not intended to limit the disclosure.

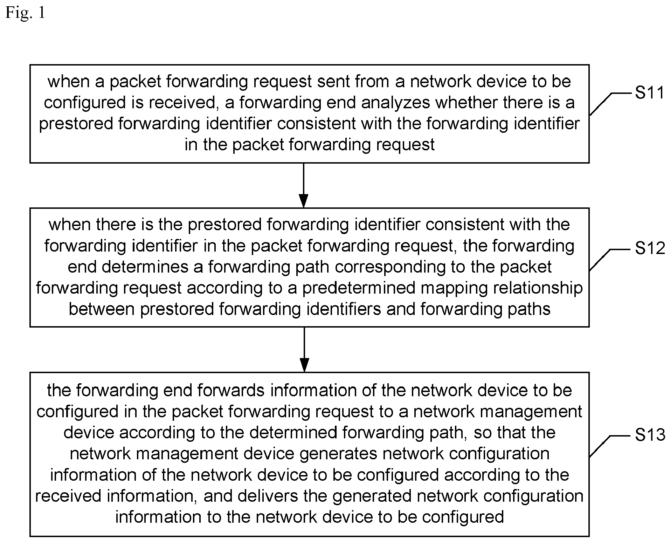

Fig. 1 is a flowchart showing a method for forwarding a network packet according to a first embodiment of the disclosure.

It is noted that the flowchart shown in Fig. 1 is only a preferred embodiment. Those skilled in the art should know that any embodiment constructed based on the idea of the disclosure should not depart from the scope covered by the following technical solution:
when a packet forwarding request sent from a network device to be configured is received, a forwarding end analyzes whether there is a prestored forwarding identifier consistent with a forwarding identifier in the packet forwarding request; when there is the prestored forwarding identifier consistent with the forwarding identifier in the packet forwarding request, the forwarding end determines a forwarding path corresponding to the packet forwarding request according to a predetermined mapping relationship between the prestored forwarding identifiers and the forwarding paths; and the forwarding end forwards information of the network device to be configured in the packet forwarding request to a network management device according to the determined forwarding path, so that the network management device generates network configuration information of the network device to be configured according to the received information, and delivers the generated network configuration information to the network device to be configured.

The present embodiment includes the following specific steps of gradually implementing the forwarding of a network packet.

At Step 11, when the packet forwarding request sent from the network device to be configured is received, the forwarding end analyzes whether there is a prestored forwarding identifier consistent with the forwarding identifier in the packet forwarding request.

Specifically, one or more network devices and a network management device are included in a network system. The network device can be a forwarding end, a data providing end and/or a data initiating end. The network management device delivers management information to each of the network devices, so as to implement management for each of the network devices. A specific network packet is set in the opening software of the network device, wherein the network packet includes the forwarding identifier. When the forwarding end establishes a communication connection with the network device to be configured (i.e. the new online network device) including the forwarding identifier, the network device to be configured sends the network packet including the forwarding identifier out, and the forwarding end which can identify the network packet receives the network packet. The network packet also encapsulates with the information of the network device to be configured. The communication connection can be a wired connection or a near field communication connection, that is, the network device to be configured can send the network packet out by means of the established wired connection or near field communication connection. When the packet forwarding request sent from the network device to be configured is received, the forwarding end analyzes whether there is a prestored forwarding identifier consistent with the forwarding identifier in the packet forwarding request, that is, the forwarding end analyzes whether the network packet can be forwarded to a target end corresponding to the packet forwarding request correctly and effectively. When there is the prestored forwarding identifier consistent with the forwarding identifier in the packet forwarding request, Step 12 is executed. When there is not the prestored forwarding identifier consistent with the forwarding identifier in the packet forwarding request, the forwarding end sends forwarding failure information to the network management device to prompt the network device to be configured that the forwarding is failed, so that monitoring personnel of the network management device designate, according to prompt information, engineering personnel to configure for the network device to be configured an identification port and an IP address of an upstream network device. As such, a communication channel between the network device to be configured and the upstream network device is established so as to cause the network device to be configured to send its own information to the network management device.

At Step 12, when there is the prestored forwarding identifier consistent with the forwarding identifier in the packet forwarding request, the forwarding end determines the forwarding path corresponding to the packet forwarding request according to the predetermined mapping relationship between the prestored forwarding identifiers and the forwarding paths.

Specifically, the forwarding end prestores at least one determined forwarding identifier, and each of the forwarding identifiers is predetermined to correspond to a different forwarding path. Alternatively, some of the forwarding identifiers correspond to the same forwarding identifier. The forwarding end can forward the received packet to either the network management device or other network device, wherein the communication channel is established between the other network device and the forwarding end. When there is the prestored forwarding identifier consistent with the forwarding identifier in the packet forwarding request, the forwarding end can forward the network packet to the target end corresponding to the packet forwarding request correctly and effectively. The forwarding end determines the forwarding path corresponding to the packet forwarding request according to the predetermined mapping relationship between the prestored forwarding identifiers and the forwarding paths. In other embodiments of the disclosure, the forwarding end prestores at least one determined forwarding identifier. Each of the forwarding identifiers is predetermined to correspond to a different target network device or network management device. Each of the target network devices corresponds to a different forwarding path. Alternatively, some of the target network devices correspond to the same forwarding path. The forwarding end determines the target network device corresponding to the packet forwarding request according to a predetermined mapping relationship between the prestored forwarding identifiers and the target network devices; and the forwarding end determines the forwarding path corresponding to the packet forwarding request according to a predetermined mapping relationship between the prestored forwarding paths and the network devices.

At Step 13, the forwarding end forwards the information of the network device to be configured in the packet forwarding request to the network management device according to the determined forwarding path, so that the network management device generates the network configuration information of the network device to be configured according to the received information, and delivers the generated network configuration information to the network device to be configured.

Specifically, when determining the forwarding path corresponding to the packet forwarding request, the forwarding end acquires the information of the network device to be configured in the packet forwarding request, and forwards the information of the network device to be configured in the packet forwarding request to the network management device according to the determined forwarding path, so that the network management device generates the network configuration information of the network device to be configured according to the received information, and delivers the generated network configuration information to the network device to be configured, wherein the network configuration information may include an IP address which is assigned to the new online network device and delivered by the network management device or the like. The information of the network device to be configured may include any information that can identify a network to be configured such as an identification code and a physical address of the network to be configured, and information about that the network device to be configured is online, or information about that the network device to be configured requests for being managed by the network management device. By taking an example of the MAC address as the forwarding identifier, a network packet including the MAC address is set in the opening software of the network device, wherein the MAC address can be identified by all of the network devices in the network system, and is different from other MAC addresses in the network system. For example, the MAC address is 00-00-00-11-22-33, which is unique, namely the MAC address is different from the MAC addresses of other devices in the network. When a new network device comes online, that is, the forwarding end establishes the communication connection with the network device for the first time, the new online network device sends the network packet set in the opening software. When the packet forwarding request sent from the network device to be configured is received, the forwarding end establishing the communication connection with the network device acquires the MAC address in the packet forwarding request, and analyzes whether there is a prestored MAC address consistent with the MAC address in the packet forwarding request. When there is the prestored MAC address consistent with the MAC address in the packet forwarding request, the forwarding end determines the forwarding path corresponding to the packet forwarding request according to a predetermined mapping relationship between the prestored MAC addresses and the forwarding paths. The forwarding end acquires information of the new online network device which is included in the packet forwarding request, and forwards the information of the new online network device to the network management device according to the determined forwarding path, so that the network management device generates network configuration information of the new online network device according to the received information, and delivers the generated network configuration information to the new online network device.

In the present embodiment, the network device to be configured initiates automatically the network packet forwarding request including the forwarding identifier; when there is the prestored forwarding identifier consistent with the forwarding identifier in the network packet forwarding request, the forwarding end determines the forwarding path corresponding to the network packet forwarding request, and forwards to the network management device the information of the network device to be configured in the network packet forwarding request according to the determined forwarding path, so that the network management device generates the network configuration information of the network device to be configured according to the received information, and delivers the generated network configuration information to the network device to be configured. As such, according to the present embodiment, the technical problems of broadcast storm in the network or occupation of the network bandwidth which are caused by the network device to be configured broadcasting its own information to the network management device are effectively avoided, the network bandwidth utilization is improved, and the new online network device is introduced more quickly to the management of the network management device.

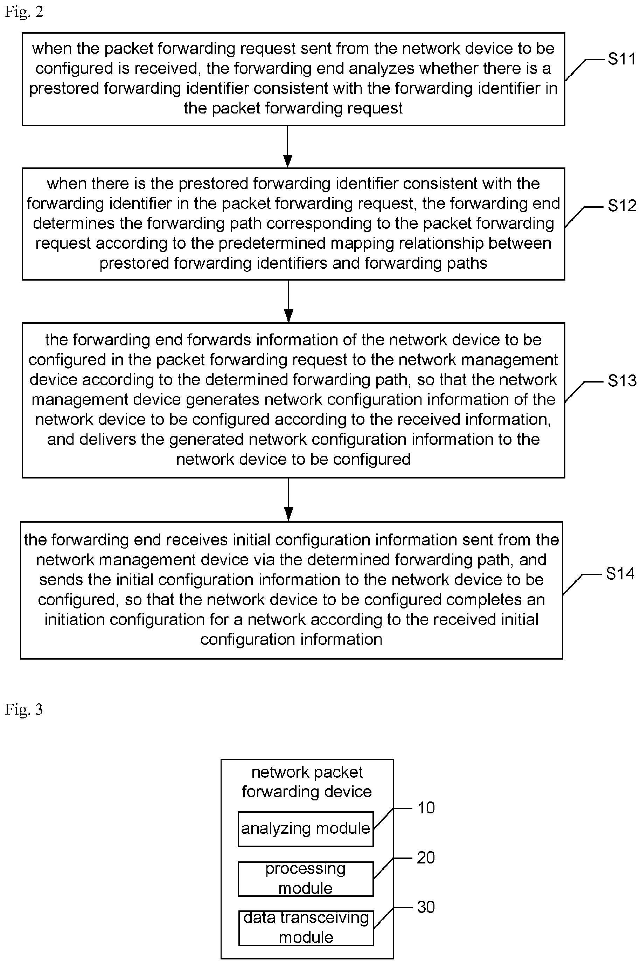

Fig. 2 is a flowchart showing a method for forwarding a network packet according to a second embodiment of the disclosure.

Based on the first embodiment, after Step 13, the method also includes the following step.

At Step 14, the forwarding end receives initial configuration information sent from the network management device via the determined forwarding path, and sends the initial configuration information to the network device to be configured, so that the network device to be configured completes an initiation configuration of a network according to the received initial configuration information.

Specifically, when the forwarding end sends the information of the network device to be configured in the packet forwarding request to the network management device via the determined forwarding path, the network management device knows that the network device to be configured has been online and it is the new online network device. The network management device generates the network configuration information of the network device to be configured according to the received information of the network device to be configured, wherein the network configuration information includes an IP address of the network device to be configured, an IP address of the forwarding end, and so on. The network management device sends the generated configuration information to the forwarding end via the determined forwarding path, and the forwarding end sends the received configuration information to the network device to be configured, so that the network device to be configured completes the initial configuration of the network according to the received initial configuration information, and establishes the connection between itself and the network management device. After completing the initial configuration, the network device to be configured can communicate with other network devices via the forwarding end and receive the management information from the network management device.

In the present embodiment, the network management device delivers the initial configuration information to the network device to be configured via the determined forwarding path, thereby implementing that the generated configuration information of the network device to be configured is delivered to the network device to be configured more quickly, so as to implement data interaction between the network device to be configured and other network devices, and improve the user experience.

Fig. 3 is a functional module diagram illustrating a device for forwarding a network packet according to a preferred embodiment of the disclosure. The device includes an analyzing module 10, a processing module 20 and a data transceiving module 30.

The analyzing module 10 is configured to, when the packet forwarding request sent from the network device to be configured is received, analyze whether there is a prestored forwarding identifier consistent with the forwarding identifier in the packet forwarding request.

Specifically, one or more network devices and a network management device are included in a network system. The network device can be a forwarding end, a data providing end and/or a data initiating end. The network management device delivers management information to each of the network devices, so as to implement management for each of the network devices. The device for forwarding the network packet is preferably a forwarding end. In other embodiments of the disclosure, the network packet forwarding device can also be a network device with a forwarding function. A specific network packet is set in the opening software of the network device, wherein the network packet includes the forwarding identifier. When the forwarding end establishes a communication connection with the network device to be configured (i.e. the new online network device) including the forwarding identifier, the network device to be configured sends the network packet including the forwarding identifier out, and the forwarding end which can identify the network packet receives the network packet. The network packet also encapsulates with the information of the network device to be configured. The communication connection can be a wired connection or a near field communication connection, that is, the network device to be configured can send the network packet out by means of the established wired connection or near field communication connection. When the data transceiving module 30 receives the packet forwarding request sent from the network device to be configured, the analyzing module 10 analyzes whether there is a prestored forwarding identifier consistent with the forwarding identifier in the packet forwarding request, that is, the forwarding end analyzes whether the network packet can be forwarded to the target end corresponding to the packet forwarding request correctly and effectively. When there is the prestored forwarding identifier consistent with the forwarding identifier in the packet forwarding request, the processing module 20 determines the forwarding path corresponding to the packet forwarding request according to the predetermined mapping relationship between the prestored forwarding identifiers and the forwarding paths. When there is not the prestored forwarding identifier consistent with the forwarding identifier in the packet forwarding request, the data transceiving module 30 sends the forwarding failure information to the network management device to prompt the network device to be configured that the forwarding is failed, so that the monitoring personnel of the network management device designate, according to the prompt information, the engineering personnel to configure for the network device to be configured the identification port and the IP address of the upstream network device. As such, the communication channel between the network device to be configured and the upstream network device is established so as to cause the network device to be configured to send its own information to the network management device.

The processing module 20 is configured to, when there is the prestored forwarding identifier consistent with the forwarding identifier in the packet forwarding request, determine the forwarding path corresponding to the packet forwarding request according to the predetermined mapping relationship between the prestored forwarding identifiers and the forwarding paths.

Specifically, the forwarding end prestores at least one determined forwarding identifier, and each of the forwarding identifiers is predetermined to correspond to a different forwarding path. Alternatively, some of the forwarding identifiers correspond to the same forwarding identifier. The forwarding end can forward the received packet to either the network management device or other network device, wherein the communication channel is established between the other network device and the forwarding end. When there is the prestored forwarding identifier consistent with the forwarding identifier in the packet forwarding request, the data transceiving module 30 can forward the network packet to the target end corresponding to the packet forwarding request correctly and effectively. The processing module 20 determines the forwarding path corresponding to the packet forwarding request according to the predetermined mapping relationship between the prestored forwarding identifier and the forwarding path. In other embodiments of the disclosure, the forwarding end prestores at least one determined forwarding identifier. Each of the forwarding identifiers is predetermined to correspond to a different target network device or network management device. Each of the target network devices corresponds to a different forwarding path. Alternatively, some of the target network devices correspond to the same forwarding path. The processing module 20 determines the target network device corresponding to the packet forwarding request according to the predetermined mapping relationship between the prestored forwarding identifiers and the target network devices. The processing module 20 determines the forwarding path corresponding to the packet forwarding request according to the predetermined mapping relationship between the prestored forwarding paths and the network devices.

The data transceiving module 30 is configured to forward the information of the network device to be configured in the packet forwarding request to the network management device according to the determined forwarding path, so that the network management device generates the network configuration information of the network device to be configured according to the received information, and delivers the generated network configuration information to the network device to be configured.

Specifically, when determining the forwarding path corresponding to the packet forwarding request, the processing module 20 acquires the information of the network device to be configured in the packet forwarding request, and the data transceiving module 30 forwards the information of the network device to be configured in the packet forwarding request to the network management device according to the determined forwarding path, so that the network management device generates the network configuration information of the network device to be configured according to the received information, and delivers the generated network configuration information to the network device to be configured, wherein the network configuration information may include the IP address which is assigned to the new online network device and delivered by the network management device or the like. The information of the network device to be configured may include any information that can identify the network to be configured such as am identification code and a physical address of the network to be configured, and information about that the network device to be configured is online, or information about that the network device to be configured requests for being managed by the network management device. By taking an example of the MAC address as the forwarding identifier, a network packet including the MAC address is set in the opening software of the network device, wherein the MAC address can be identified by all of the network devices in the network system, and is different from other MAC addresses in the network system. For example, the MAC address can be 00-00-00-11-22-33, which is unique, namely the MAC address is different from the MAC addresses of other devices in the network. When a new network device comes online, that is, the data transceiving module 30 establishes the communication connection with the network device for the first time, the new online network device sends the network packet set in the opening software. When the data transceiving module 30, which establishes the communication connection with the processing module 20, receives the packet forwarding request sent from the network device to be configured, the processing module 20 acquires the MAC address in the packet forwarding request, and the analyzing module 10 analyzes whether there is a prestored MAC address consistent with the MAC address in the packet forwarding request. When there is the prestored MAC address consistent with the MAC address in the packet forwarding request, the processing module 20 determines the forwarding path corresponding to the packet forwarding request according to the predetermined mapping relationship between the prestored MAC addresses and the forwarding paths. The processing module 20 acquires the information of the new online network device which is included in the packet forwarding request, and forwards, through the data transceiving module 30, the information of the new online network device to the network management device according to the determined forwarding path, so that the network management device generates the network configuration information of the network device newly online according to the received information, and delivers the generated network configuration information to the new online network device.

In the present embodiment, the network device to be configured initiates automatically the network packet forwarding request including the forwarding identifier; when there is the prestored forwarding identifier consistent with the forwarding identifier in the network packet forwarding request, the processing module 20 determines the forwarding path corresponding to the network packet forwarding request, and forwards to the network management device the information of the network device to be configured in the network packet forwarding request through the data transceiving module 30 according to the determined forwarding path, so that the network management device generates the network configuration information of the network device to be configured according to the received information, and delivers the generated network configuration information to the network device to be configured. As such, according to the present embodiment, the technical problems of broadcast storm in the network or occupation of the network bandwidth which are caused by the network device to be configured broadcasting its own information to the network management device are effectively avoided, the network bandwidth utilization is improved, and the new online network device is introduced more quickly to the management of the network management device.

Preferably, the data transceiving module 30 is further configured to receive the initial configuration information sent from the network management device via the determined forwarding path, and send the initial configuration information to the network device to be configured, so that the network device to be configured completes the initiation configuration of the network according to the received initial configuration information.

Specifically, when the data transceiving module 30 sends the information of the network device to be configured in the packet forwarding request to the network management device via the determined forwarding path, the network management device knows that the network device to be configured has been online and it is the new online network device. The network management device generates the network configuration information of the network device to be configured according to the received information of the network device to be configured, wherein the network configuration information includes the IP address of the network device to be configured, the IP address of the forwarding end, and so on. The network management device sends the generated configuration information to the forwarding end via the determined forwarding path, and the data transceiving module 30 sends the received configuration information to the network device to be configured, so that the network device to be configured completes the initial configuration of the network according to the received initial configuration information, and establishes the connection between itself and the network management device. After completing the initial configuration, the network device to be configured can communicate with other network devices via the forwarding end and receive the management information from the network management device.

In the present embodiment, the network management device delivers the initial configuration information to the network device to be configured via the determined forwarding path, thereby implementing that the generated configuration information of the network device to be configured is delivered to the network device to be configured more quickly, so as to implement data interaction between the network device to be configured and other network devices, and improve the user experience.

### INDUSTRIAL APPLICABILITY

In combination with the embodiments of the disclosure, the forwarding end receives the packet forwarding request sent from the network device to be configured, and determines the forwarding path according to the packet forwarding request, so that the network management device sends the generated configuration information to the network device to be configured via the determined forwarding path. Thus, the disclosure can effectively avoid the technical problems of broadcast storm in the network or occupying the network bandwidth which are caused by the network device to be configured broadcasting its own information to the network management device, improve the network bandwidth utilization, and introduce the new online network device to the management of the network management device more quickly.

## Claims

1. A method for forwarding a network packet, comprising the steps of:
establishing, by a forwarding end, a communication connection with a network device to be configured;
analysing (S11), by the forwarding end, whether there is a prestored forwarding identifier consistent with a forwarding identifier in the packet forwarding request when a packet forwarding request sent from the network device to be configured is received;
determining (S12), by the forwarding end, a forwarding path corresponding to the packet forwarding request according to a predetermined mapping relationship between prestored forwarding identifiers and forwarding paths when there is the prestored forwarding identifier consistent with the forwarding identifier in the packet forwarding request; and
forwarding (S13), by the forwarding end, information of the network device to be configured in the packet forwarding request to a network management device via the determined forwarding path, so that the network management device generates network configuration information of the network device to be configured according to the received information, and delivers the generated network configuration information to the network device to be configured;
wherein the step of determining (S12), by the forwarding end, the forwarding path comprises:
determining, by the forwarding end, a target network device corresponding to the packet forwarding request according to a predetermined mapping relationship between prestored forwarding identifiers and target network devices; and
according to a predetermined mapping relationship between prestored forwarding paths and network devices, determining the forwarding path corresponding to the packet forwarding request.

2. The method of claim 1, further comprising:
after analyzing, by the forwarding end, whether there is a prestored forwarding identifier consistent with the forwarding identifier in the packet forwarding request when the packet forwarding request sent from the network device to be configured is received,
when there is not a prestored forwarding identifier consistent with the forwarding identifier in the packet forwarding request, sending, by the forwarding end, forwarding failure information to a network management end so as to prompt the network device to be configured that the forwarding is failed.

3. The method of claim 1, further comprising:
after forwarding, by the forwarding end, the information of the network device to be configured in the packet forwarding request to the network management device according to the determined forwarding path, so that the network management device generates the network configuration information of the network device to be configured according to the received information, and delivers the generated network configuration information to the network device to be configured,
receiving, by the forwarding end, initial configuration information sent from the network management device via the determined forwarding path, and sending the initial configuration information to the network device to be configured, so that the network device to be configured completes an initiation configuration for a network according to the received initial configuration information.

4. A device for forwarding a network packet, comprising: an analyzing module (10), a processing module (20), and a data transceiving module (30), wherein
the analyzing module (10) is configured to, when a packet forwarding request sent from a network device to be configured is received, analyze whether there is a prestored forwarding identifier consistent with a forwarding identifier in the packet forwarding request;
the processing module (20) is configured to, when there is the prestored forwarding identifier consistent with the forwarding identifier in the packet forwarding request, determine a forwarding path corresponding to the packet forwarding request according to a predetermined mapping relationship between prestored forwarding identifiers and forwarding paths; and
the data transceiving module (30) is configured to forward information of the network device to be configured in the packet forwarding request to a network management device via the determined forwarding path, so that the network management device generates network configuration information of the network device to be configured according to the received information, and delivers the generated network configuration information to the network device to be configured;
wherein the processing module (20) is further configured to determine a target network device corresponding to the packet forwarding request according to a predetermined mapping relationship between prestored forwarding identifiers and target network devices, and to determine the forwarding path corresponding to the packet forwarding request according to a predetermined mapping relationship between prestored forwarding paths and network devices;
wherein the data transceiving module (30) is further configured to establish a communication connection between the forwarding end and the network device to be configured.

5. The device of claim 4, wherein,
the data transceiving module (30) is further configured to, when there is not a prestored forwarding identifier consistent with the forwarding identifier in the packet forwarding request, send forwarding failure information to a network management end so as to prompt the network device to be configured that the forwarding is failed.

6. The device of claim 4, wherein,
the data transceiving module (30) is further configured to receive initial configuration information sent from the network management device via the determined forwarding path, and send the initial configuration information to the network device to be configured, so that the network device to be configured completes an initiation configuration for a network according to the received initial configuration information.

## Patentansprüche

1. Verfahren zum Weiterleiten eines Netzwerk-Datenpakets, umfassend die Schritte:
Erstellen, durch ein Weiterleitungsende, einer Kommunikationsverbindung mit einer Netzwerkvorrichtung, die konfiguriert werden soll;
Analysieren (S11), durch das Weiterleitungsende, ob ein im Vorhinein gespeicherter Weiterleitungsidentifikator, der mit einem Weiterleitungsidentifikator in der Datenpaket-Weiterleitungsanfrage übereinstimmt, wenn eine Datenpaket-Weiterleitungsanfrage, die von der zu konfigurierenden Netzwerkvorrichtung gesendet wird, empfangen wird;
Bestimmen (S12), durch das Weiterleitungsende, eines Weiterleitungspfads, welcher der Datenpaket-Weiterleitungsanfrage entspricht, gemäß einer vorgegebenen Mapping-Beziehung zwischen im Vorhinein gespeicherten Weiterleitungsidentifikatoren und Weiterleitungspfaden, wenn der im Vorhinein gespeicherte Weiterleitungsidentifikator vorliegt, der mit dem Weiterleitungsidentifikator in der Datenpaket-Weiterleitungsanfrage identisch ist; und
Weiterleiten (S13), durch das Weiterleitungsende, von Informationen der zu konfigurierenden Netzwerkvorrichtung in der Datenpaket-Weiterleitungsanfrage zu einer Netzwerkverwaltungsvorrichtung über den vorgegebenen Weiterleitungspfad, so dass die Netzwerkverwaltungsvorrichtung Netzwerkkonfigurationsinformationen der zu konfigurierenden Netzwerkvorrichtung gemäß den empfangenen Informationen erzeugt und die erzeugten Netzwerkkonfigurationsinformationen zu der zu konfigurierenden Netzwerkvorrichtung weitergibt;
wobei der Schritt des Bestimmens (S12), durch das Weiterleitungsende, des Weiterleitungspfads umfasst:
Bestimmen, durch das Weiterleitungsende, einer Zielnetzwerkvorrichtung, die der Datenpaket-Weiterleitungsanfrage entspricht, gemäß einer vorgegebenen Mapping-Beziehung zwischen im Vorhinein gespeicherten Weiterleitungsidentifikatoren und Zielnetzwerkvorrichtungen; und
Bestimmen des Weiterleitungspfads entsprechend der Datenpaket-Weiterleitungsanfrage gemäß einer vorgegebenen Mapping-Beziehung zwischen im Vorhinein gespeicherten Weiterleitungspfaden und Netzwerkvorrichtungen.

2. Verfahren nach Anspruch 1, weiter umfassend:
nach dem Analysieren, durch das Weiterleitungsende, ob ein im Vorhinein gespeicherter Weiterleitungsidentifikator vorliegt, der mit dem Weiterleitungsidentifikator in der Datenpaket-Weiterleitungsanfrage übereinstimmt, wenn die Datenpaket-Weiterleitungsanfrage, die von der zu konfigurierenden Netzwerkvorrichtung gesendet wird, empfangen wird,
wenn kein im Vorhinein gespeicherter Weiterleitungsidentifikator vorliegt, der mit dem Weiterleitungsidentifikator in der Datenpaket-Weiterleitungsanfrage übereinstimmt, Senden, durch das Weiterleitungsende, von Weiterleitungsfehlschlaginformationen zu einem Netzwerkverwaltungsende, so dass die Netzwerkvorrichtung aufgefordert wird, so konfiguriert zu werden, dass die Weiterleitung fehlgeschlagen ist.

3. Verfahren nach Anspruch 1, weiter umfassend:
nach dem Weiterleiten, durch das Weiterleitungsende, der Informationen der zu konfigurierenden Netzwerkvorrichtung in der Datenpaket-Weiterleitungsanfrage zu der Netzwerkverwaltungsvorrichtung gemäß dem vorgegebenen Weiterleitungspfad, so dass die Netzwerkverwaltungsvorrichtung die Netzwerkkonfigurationsinformationen der zu konfigurierenden Netzwerkvorrichtung gemäß den empfangenen Informationen erzeugt und die erzeugten Netzwerkkonfigurationsinformationen zu der zu konfigurierenden Netzwerkvorrichtung weitergibt;
Empfangen, durch das Weiterleitungsende, von anfänglichen Konfigurationsinformationen, die von der Netzwerkverwaltungsvorrichtung über den vorgegebenen Weiterleitungspfad gesendet worden sind, und Senden der anfänglichen Konfigurationsinformationen zu der zu konfigurierenden Netzwerkvorrichtung, so dass die zu konfigurierende Netzwerkvorrichtung eine Initiationskonfiguration für ein Netzwerk gemäß der empfangenen anfänglichen Konfigurationsinformationen abschließt.

4. Vorrichtung zum Weiterleiten eines Netzwerk-Datenpakets, umfassend: ein Analysemodul (10), ein Verarbeitungsmodul (20) und ein Datenübermittlungsmodul (30), wobei
das Analysemodul (10) so ausgebildet ist, dass es dann, wenn eine Datenpaket-Weiterleitungsanfrage, die von einer zu konfigurierenden Netzwerkvorrichtung gesendet wird, empfangen wird, analysiert, ob ein im Vorhinein gespeicherter Weiterleitungsidentifikator vorliegt, der mit einem Weiterleitungsidentifikator in der Datenpaket-Weiterleitungsanfrage übereinstimmt;
das Verarbeitungsmodul (20) so ausgebildet ist, dass es dann, wenn der im Vorhinein gespeicherte Weiterleitungsidentifikator vorliegt, der mit dem Weiterleitungsidentifikator in der Datenpaket-Weiterleitungsanfrage identisch ist, einen Weiterleitungspfad, welcher der Datenpaket-Weiterleitungsanfrage entspricht, gemäß einer vorgegebenen Mapping-Beziehung zwischen im Vorhinein gespeicherten Weiterleitungsidentifikatoren und Weiterleitungspfaden bestimmt; und
das Datenübermittlungsmodul (30) so ausgebildet ist, dass es Weiterleitungsinformationen der zu konfigurierenden Netzwerkvorrichtung in der Datenpaket-Weiterleitungsanfrage zu einer Netzwerkverwaltungsvorrichtung über den vorgegebenen Weiterleitungspfad weiterleitet, so dass die Netzwerkverwaltungsvorrichtung Netzwerkkonfigurationsinformationen der zu konfigurierenden Netzwerkvorrichtung gemäß den empfangenen Informationen erzeugt und die erzeugten Netzwerkkonfigurationsinformationen zu der zu konfigurierenden Netzwerkvorrichtung weitergibt;
wobei das Verarbeitungsmodul (20) ferner so ausgebildet ist, dass es eine Zielnetzwerkvorrichtung, die der Datenpaket-Weiterleitungsanfrage entspricht, gemäß einer Mapping-Beziehung zwischen im Vorhinein gespeicherten Weiterleitungsidentifikatoren und Zielnetzwerkvorrichtungen bestimmt, und den Weiterleitungspfad entsprechend der Datenpaket-Weiterleitungsanfrage gemäß einer vorgegebenen Mapping-Beziehung zwischen im Vorhinein gespeicherten Weiterleitungspfaden und Netzwerkvorrichtungen bestimmt;
wobei das Datenübermittlungsmodul (30) ferner so ausgebildet ist, dass es eine Kommunikationsverbindung zwischen dem Weiterleitungsende und der zu konfigurierenden Netzwerkvorrichtung erstellt.

5. Vorrichtung nach Anspruch 4, bei der
das Datenübermittlungsmodul (30) ferner so ausgebildet ist, dass es dann, wenn kein im Vorhinein gespeicherter Weiterleitungsidentifikator vorliegt, der mit dem Weiterleitungsidentifikator in der Datenpaket-Weiterleitungsanfrage übereinstimmt, Weiterleitungsfehlschlaginformationen zu einem Netzwerkverwaltungsende sendet, so dass die Netzwerkvorrichtung aufgefordert wird, so konfiguriert zu werden, dass die Weiterleitung fehlgeschlagen ist.

6. Vorrichtung nach Anspruch 4, bei der
das Datenübermittlungsmodul (30) ferner so ausgebildet ist, dass es anfängliche Konfigurationsinformationen empfängt, die von der Netzwerkverwaltungsvorrichtung über den vorgegebenen Weiterleitungspfad gesendet worden sind, und die anfänglichen Konfigurationsinformationen zu der zu konfigurierenden Netzwerkvorrichtung sendet, so dass die zu konfigurierende Netzwerkvorrichtung eine Initiationskonfiguration für ein Netzwerk gemäß der empfangenen anfänglichen Konfigurationsinformationen abschließt.

## Revendications

1. Procédé de transmission d'un paquet de réseau, comprenant les étapes ci-dessous consistant à :
établir, par le biais d'une extrémité de transmission, une connexion de communication avec un dispositif de réseau devant être configuré ;
analyser (S11), par le biais de l'extrémité de transmission, s'il existe un identificateur de transmission stocké au préalable compatible avec un identificateur de transmission dans la demande de transmission de paquet, lorsqu'une demande de transmission de paquet envoyée à partir du dispositif de réseau devant être configuré est reçue ;
déterminer (S12), par le biais de l'extrémité de transmission, un chemin de transmission correspondant à la demande de transmission de paquet, selon une relation de correspondance prédéterminée entre des identificateurs de transmission stockés au préalable et des chemins de transmission, lorsqu'existe l'identificateur de transmission stocké au préalable compatible avec l'identificateur de transmission dans la demande de transmission de paquet ; et
transmettre (S13), par le biais de l'extrémité de transmission, des informations du dispositif de réseau devant être configuré dans la demande de transmission de paquet, à un dispositif de gestion de réseau, par l'intermédiaire du chemin de transmission déterminé, de sorte que le dispositif de gestion de réseau génère des informations de configuration de réseau du dispositif de réseau devant être configuré selon les informations reçues, et délivre les informations de configuration de réseau générées au dispositif de réseau devant être configuré ;
dans lequel l'étape de détermination (S12), par l'extrémité de transmission, du chemin de transmission, comprend les étapes ci-dessous consistant à :
déterminer, par le biais de l'extrémité de transmission, un dispositif de réseau cible correspondant à la demande de transmission de paquet, selon une relation de correspondance prédéterminée entre des identificateurs de transmission stockés au préalable et des dispositifs de réseau cibles ; et
selon une relation de correspondance prédéterminée entre des chemins de transmission stockés au préalable et des dispositifs de réseau, déterminer le chemin de transmission correspondant à la demande de transmission de paquet.

2. Procédé selon la revendication 1, comprenant en outre l'étape ci-dessous consistant à :
après avoir analysé, par le biais de l'extrémité de transmission, s'il existe un identificateur de transmission stocké au préalable compatible avec l'identificateur de transmission dans la demande de transmission de paquet lorsque la demande de transmission de paquet envoyée à partir du dispositif de réseau devant être configuré est reçue,
lorsqu'il n'existe pas d'identificateur de transmission stocké au préalable compatible avec l'identificateur de transmission dans la demande de transmission de paquet, envoyer, par le biais de l'extrémité de transmission, des informations d'échec de transmission à une extrémité de gestion de réseau, afin d'indiquer au dispositif de réseau devant être configuré que la transmission a échoué.

3. Procédé selon la revendication 1, comprenant en outre les étapes ci-dessous consistant à :
suite à la transmission, par le biais de l'extrémité de transmission, des informations du dispositif de réseau devant être configuré dans la demande de transmission de paquet au dispositif de gestion de réseau selon le chemin de transmission déterminé, de sorte que le dispositif de gestion de réseau génère les informations de configuration de réseau du dispositif de réseau devant être configuré selon les informations reçues, et délivre les informations de configuration de réseau générées au dispositif de réseau devant être configuré,
recevoir, par le biais de l'extrémité de transmission, des informations de configuration initiale envoyées à partir du dispositif de gestion de réseau par l'intermédiaire du chemin de transmission déterminé, et envoyer les informations de configuration initiale au dispositif de réseau devant être configuré, de sorte que le dispositif de réseau devant être configuré achève une configuration d'initiation pour un réseau selon les informations de configuration initiale reçues.

4. Dispositif destiné à transmettre un paquet de réseau, comprenant : un module d'analyse (10), un module de traitement (20), et un module d'émission-réception de données (30), dans lequel :
le module d'analyse (10) est configuré de manière à, lorsqu'une demande de transmission de paquet envoyée à partir d'un dispositif de réseau devant être configuré est reçue, analyser s'il existe un identificateur de transmission stocké au préalable compatible avec un identificateur de transmission dans la demande de transmission de paquet ;
le module de traitement (20) est configuré de manière à, lorsqu'existe l'identificateur de transmission stocké au préalable compatible avec l'identificateur de transmission dans la demande de transmission de paquet, déterminer un chemin de transmission correspondant à la demande de transmission de paquet, selon une relation de correspondance prédéterminée entre des identificateurs de transmission stockés au préalable et des chemins de transmission ; et
le module d'émission-réception de données (30) est configuré de manière à transmettre des informations du dispositif de réseau devant être configuré dans la demande de transmission de paquet, à un dispositif de gestion de réseau, par l'intermédiaire du chemin de transmission déterminé, de sorte que le dispositif de gestion de réseau génère des informations de configuration de réseau du dispositif de réseau devant être configuré selon les informations reçues, et délivre les informations de configuration de réseau générées au dispositif de réseau devant être configuré ;
dans lequel le module de traitement (20) est en outre configuré de manière à déterminer un dispositif de réseau cible correspondant à la demande de transmission de paquet selon une relation de correspondance prédéterminée entre des identificateurs de transmission stockés au préalable et des dispositifs de réseau cibles, et à déterminer le chemin de transmission correspondant à la demande de transmission de paquet selon une relation de correspondance prédéterminée entre des chemins de transmission stockés au préalable et des dispositifs de réseau ;
dans lequel le module d'émission-réception de données (30) est en outre configuré de manière à établir une connexion de communication entre l'extrémité de transmission et le dispositif de réseau devant être configuré.

5. Dispositif selon la revendication 4, dans lequel,
le module d'émission-réception de données (30) est en outre configuré de manière à, lorsqu'il n'existe pas d'identificateur de transmission stocké au préalable compatible avec l'identificateur de transmission dans la demande de transmission de paquet, envoyer des informations d'échec de transmission à une extrémité de gestion de réseau, afin d'indiquer au dispositif de réseau devant être configuré que la transmission a échoué.

6. Dispositif selon la revendication 4, dans lequel,
le module d'émission-réception de données (30) est en outre configuré de manière à recevoir des informations de configuration initiale envoyées à partir du dispositif de gestion de réseau par l'intermédiaire du chemin de transmission déterminé, et à envoyer les informations de configuration initiale au dispositif de réseau devant être configuré, de sorte que le dispositif de réseau devant être configuré achève une configuration d'initiation pour un réseau selon les informations de configuration initiale reçues.
